# EUROPEAN PATENT APPLICATION

(11) **EP 4 060 084 A1**
(43) Date of publication of application: **21.09.2022**
(21) Application number: 21163320.1
(22) Date of filing: 18.03.2021
(51) Int. Cl.: C25B 1/04, C25B 1/23, C25B 3/26, H02J 3/28, H02J 3/38, H02J 3/32, H02J 15/00

(54) **ELECTROLYSIS SYSTEM AND METHOD**

(71) Applicant: Siemens Energy Global GmbH & Co. KG, 81739 München (DE)
(72) Inventor: Fleischer, Maximilian, 85635 Höhenkirchen (DE); Thiemann, Thomas, 45659 Recklinghausen (DE)

(57) **Abstract**

The present invention relates to the generation of an electrolysis product (6), in particular to an electrolysis system (100) and a method for generating the electrolysis product (6). A plurality of electrically intercoupled electrolysis units (1) are provided. Each of the electrolysis units (1) comprises (i) an electrolysis assembly (2) comprising a plurality of electrolysis cells (5) configured to, upon provision of a direct current, generate the electrolysis product (6) from a supply medium (7), and (ii) a photovoltaic assembly (3) electrically coupled to the electrolysis assembly (2) for providing the electrolysis cells (5) with direct current generated from incident electromagnetic radiation.

## Description

The present invention relates to the generation of an electrolysis product, in particular to an electrolysis system and a method for generating the electrolysis product.

Electrolysis is a widely known electro-chemical method, wherein a direct (electrical) current (DC) is used to drive an otherwise non-spontaneous chemical reaction. It has gotten recent attention as a factor in fighting climate change, as it may be utilised in so-called "power to X" processes. In these processes, electrical energy converts generally a supply medium (such as water or CO₂) into chemical energy via electrolysis. The electrolysis products containing this energy range from e.g. hydrogen H₂ (with O₂ as by-product) over small hydrocarbons like methane CH₄ (also termed "synthetic natural gas" SNG, or synthetic LNG in its liquid form), Ethylene C₂H₄, Ethanol C₂H₅OH to ammonia NH₃ or carbon monoxide CO. These molecules may be used as fuel, e.g. for corresponding vehicles or generators, or as feedstock for the chemical industry.

A currently established industrial procedure is to generate renewable electrical energy, transport this energy via the electrical (public) power grid to an electrolyser and then produce these electrolysis products out of a supply medium, e.g. water H₂O, carbon dioxide CO₂ or nitrogen N₂. This procedure provides the advantage of a certain spatial decoupling of renewable energy generation and the generation of the electrolysis products, e.g. allowing for efficient use of the infrastructure already present.

It is an object of the present invention to improve the generation of an electrolysis product, in particular to increase the efficiency of this process, simplify intermediate components and/or reduce the overall costs.

This object is solved by an electrolysis system and a method for generating an electrolysis product according to the independent claims.

Preferred embodiments of the invention are subject to the dependent claims and the following description.

An electrolysis system according to a first aspect of the invention comprises a plurality of, i.e. at least two, electrically intercoupled electrolysis units. Each of the electrolysis units comprises (i) an electrolysis assembly comprising a plurality of, in particular stacked, electrolysis cells configured to, upon provision of a direct electrical current, generate an electrolysis product from a supply medium, and (ii) a photovoltaic assembly electrically coupled to the electrolysis assembly for providing the electrolysis cells with direct electrical current generated from incident electromagnetic radiation.

An electrical coupling in the sense of the present invention is in particular a coupling which facilitates the transmission of electrical current, in particular direct current, or, more generally speaking, the transmission of electrical energy. Hence, electrically intercoupled electrolysis units enable the, preferably selective, transmission of direct current or electrical energy, respectively, between any ones of the electrolysis units. In particular, the electrical coupling enables the, preferably selective, electrical connection between any ones of the electrolysis units. Preferably, an electrical coupling shall not be regarded as an actual electrical connection between any ones of the electrolysis units, but as a configuration which readily allows to establish such actual connection.

For example, an electrical coupling may be realized by a switch between two electrolysis units. If the switch is open, the electrical connection is broken, and no direct current or electrical energy, respectively, can be transmitted - but the units shall preferably still be regarded as being electrically coupled in the sense of the present invention.

An aspect of the invention is based on the approach of providing an electrolysis system comprising a plurality of electrolysis units, wherein the electrolysis units are configured to exchange electrical energy, in particular direct current, generated by photovoltaic assemblies of said electrolysis units. By means of this exchanged electric energy, electrolysis assemblies of the electrolysis units may be operated in a particularly reliable and efficient manner. To allow for the exchange of electrical energy, the electrolysis units are preferably electrically intercoupled. In other words, the system advantageously comprises a plurality of electrolysis units electrically coupled with each other, wherein an electrical coupling between the electrolysis units is preferably a DC coupling. The electrical interconnection thus allows for a flexible and efficient use of the electric energy generated by the photovoltaic assemblies. In particular, a smart and efficient operation of at least a part of the electrolysis assemblies is possible. Thus, an improved, in particular more sustained and/or economical, operation of the system may be achieved.

A further advantage of the electrolysis system lies in the combination of a photovoltaic assembly with an electrolysis assembly, in particular in the direct current-based (DC) coupling between photovoltaic assembly and electrolysis assembly, in each of the electrolysis units. In contrast to conventional approaches, where electrical energy generated by photovoltaic assemblies is transferred via the power grid to an electrolyser and therefore needs to undergo power conversion and/or transformation, a conversion and/or transformation is not necessary in the present case. Accordingly, inevitable power losses associated with the conversion and/or transformation can be prevented, making the electrolysis system more efficient and, from an economic point of view, cost-effective.

Each electrolysis assembly comprises a plurality of electrolysis cells and may be configured as an electrolyser, in particular an industrial electrolyser. Each electrolysis cell preferably comprises at least two electrodes, in particular at least one negative electrode and at least one positive electrode, and may be supplied with a supply medium, for example water H₂O, carbon dioxide CO₂, or nitrogen N₂. From the supply medium, an electrolysis product may be generated upon application of direct current to the electrolysis cell, in particular the at least two electrodes.

The electrolysis product preferably contains a high amount of energy. For example, the electrolysis product may comprise energy containing molecules, also termed high-energy molecules, which allow for the controlled release of energy upon another chemical reaction. Alternatively, the electrolysis product may be suitable for a chemical production reaction, in particular thermochemical reaction, with another reaction substance to generate an output product containing the high amount of energy, for example energy containing molecules.

Each electrolysis assembly, in particular each of the plurality of electrolysis cells thereof, preferably comprises an inlet port for coupling to a supply line, the supply line being configured to provide the supply medium. Additionally, each electrolysis assembly, in particular each of the plurality of electrolysis cells thereof, preferably comprises an outlet port for coupling to a collection line, the collection line being configured to collect the electrolysis product, advantageously from each of the electrolysis assemblies of every electrolysis unit.

Preferred embodiments of the invention and further aspects thereof are described below, each of which, unless expressly excluded, may be combined with each other and with the aspects of the invention described below as desired.

In a preferred embodiment, the electrolysis system is configured to distribute electrical energy generated from the photovoltaic assemblies between the electrolysis assemblies based on at least one control parameter. To this end, the electrolysis system preferably comprises at least one control unit configured to control the distribution of electrical energy generated from the photovoltaic assemblies between the electrolysis assemblies. Further, the electrolysis system preferably comprises at least one power splitter, in particular DC power electronics, for, in particular selectively, routing direct current generated from the photovoltaic assemblies to the electrolysis assemblies. By the distribution of electrical energy, the electrolysis assemblies can be operated flexibly, for example situation-dependent.

In another preferred embodiment, the control parameter is any one of the following: (i) a total energy output of the photovoltaic assemblies, (ii) an operating state of a power grid, (iii) a market price for electrical power, (iv) a prediction of the market price of electrical power, (v) a prediction of illumination/weather conditions, (vi) an amount of electrical energy stored in at least one energy storage unit, (vii) maximum electrolysis product production, (viii) equipment life-time optimization, (ix) minimum degradation, (x) storage assembly utilization, (xi) optimization of static pressure level of the electrolysis product, (xii) cooling conditions, (xiii) heat utilization, (xiv) optimization of oxygen usage and/or (xv) optimization of supply by the supply medium. To this end, the electrolysis system, in particular the control unit, is preferably configured to monitor the control parameter, in particular to test whether the control parameter has reached and/or dropped below and/or exceeded a predetermined threshold. Advantageously, the electrolysis system, in particular the control unit, is configured to receive data indicative of the control parameter and to compare it with the corresponding threshold, and to route the electrical energy based on a result of the comparison.

For example, the electrolysis system may be configured to distribute the generated electric energy between the electrolysis assemblies such that at least some may operate at an optimal operation point if the total energy output of the photovoltaic assemblies indicates that the photovoltaic assemblies do not produce enough power for, in particular efficient, operation of all electrolysis assemblies. For example, the control unit may be configured to check whether the total energy output of the photovoltaic assemblies reaches or falls below a predetermined power threshold and, based on a result of the checking, route electrical energy generated by the photovoltaic assemblies such that at least some of the electrolysis assembly can operate on optimum voltage. Thereby, reliable and substantially sustained operation of at least some of the electrolysis assemblies can be secured.

It is also conceivable that, alternatively or additionally, the control unit is configured to operate at least a part of the electrolysis assemblies not in a regular, in particular optimal, operating state. This may be advantageous if only a limited power supply is available under optimal prescribed parameters. Further, by this means, aging/wear of the components may be kept to a minimum.

Alternatively or additionally, the electrolysis system may be configured to feed the generated electric energy at least partly to the power grid in order to stabilise the power grid if an operating state of the power grid indicates that the grid becomes unstable.

Alternatively or additionally, the electrolysis system may be configured to route the generated electric energy to the grid if according to the market price for electrical power it is economically more attractive to produce electrical power instead of the electrolysis product.

Likewise, it is conceivable that the electrolysis system is configured to route, based on a prediction for the market price of electrical power, the generated electric energy to an energy storage unit, for example a battery. Accordingly, the stored electric energy can be fed into the power grid, i.e. sold, at a later time when the market price has increased.

Alternatively or additionally, the electrolysis system may be configured to route the generated electric energy to the energy storage unit if a prediction of weather conditions - and therefore the expected power generation of the photovoltaic assemblies - indicates that the energy generation will not be sufficient to satisfy the power requirements of the electrolysis assemblies in the (near) future. By this means, a substantially sustained operation of the electrolysis assemblies can be secured.

Alternatively or additionally, the electrolysis system may be configured to provide additional electric energy to a particular electrolysis assembly if the operating state of said electrolysis assembly indicates operation off its optimal operation point. In particular, the system may be configured to route the electric energy in a manner such that the electrical voltage applied to this particular electrolysis assembly is raised or lowered, respectively. This allows for a particularly sustained and reliable operation of at least the part of the electrolysis assemblies.

In yet another preferred embodiment, the electrolysis system comprises a central power splitting unit electrically connected to each of the electrolysis units, the central power splitting unit being configured to selectively route electrical energy between at least two electrolysis units. Preferably, each of the plurality of electrolysis units comprises a, in particular bidirectional, electrical connection to the central power splitting unit, such that the photovoltaic assembly of each of the electrolysis units can provide the generated direct current at least partly to the central power splitting unit, and/or the electrolysis assembly of each of the electrolysis units can receive at least a part of the direct current provided to the central power splitting unit. By this means, flexible routing of the generated direct currents becomes possible. In particular, the electrical energy generated by two or more photovoltaic assemblies can be bundled together and provided to any one of the electrolysis assemblies, thereby enabling substantially sustained power supply for at least a part of the electrolysis assemblies.

In yet another preferred embodiment, the electrolysis system comprises a control unit configured to control the distribution of electrical energy generated by the photovoltaic assemblies between the electrolysis assemblies. The control unit is preferably configured to control the distribution based on the control parameter, in particular based on an operating state of at least one of the photovoltaic assemblies and/or an operating state of at least one of the electrolysis assemblies. By this means, a reliable, situation-dependent routing of the generated direct current becomes possible.

For example, the control unit may be configured to route an additional direct current to a particular electrolysis assembly if the operating state of this electrolysis assembly indicates that it is not running in an optimal state, e.g. non-efficient or in a mode leading to high aging/wear. Alternatively or additionally, the control unit may be configured to route direct current to an electrolysis assembly, if the operating state of the photovoltaic assembly of the corresponding electrolysis unit indicates that the photovoltaic assembly cannot generate the amount of electrical energy required to operate the electrolysis assembly, in particular that it is currently inoperative.

Preferably, the control unit is a central control unit. Advantageously, the central control unit is configured to control the central power splitting unit. In particular, the central control unit is preferably configured to receive data representative of the at least one control parameter, for example indicative of an operating state of each of the photovoltaic assemblies and/or electrolysis assemblies. By configuring the control unit as a central control unit, the control unit can monitor the production and consumption of electrical energy throughout the electrolysis system and efficiently route said energy accordingly.

Alternatively, each of the electrolysis units comprises a control logic configured to communicate with the control logics of each of the other electrolysis units. In other words, each of the electrolysis units is a "smart" electrolysis unit. Thus, each electrolysis unit is preferably configured to monitor the production and consumption of electrical energy throughout the electrolysis system and receive or transmit electrical energy from/to other electrolysis units if required. To this end, all electrolysis assemblies are advantageously connected to a central connecting power line. Preferably, each of the control logics are accordingly configured to control the routing of electrical energy, in particular excess energy, generated by the corresponding photovoltaic assembly into the central connecting power line and/or draw electrical energy, in particular additional energy, from the central connecting power line.

In yet another preferred embodiment, the electrolysis system comprises an external power connection, for example a power grid interface, configured to be coupled to a power grid. By this means, the electrolysis assemblies can be operated in a particularly reliable manner and/or the electrical energy generated by the photovoltaic assemblies can be utilised in a particularly flexible manner. For example, if the market price for electrical energy is particularly high, at least a part of the electrical power generated by the photovoltaic assemblies can be fed into the power grid to further increase revenue.

In another preferred embodiment, the electrolysis system is configured to draw electrical energy from the power grid via the external power connection and/or to provide electrical energy, in particular excess energy, generated by the photovoltaic assemblies to the power grid via the external power connection. Accordingly, during times of low or no power generation, e.g. during cloudy weather, at night, dusk and/or dawn, additional power may be drawn from the grid to secure efficient and/or sustained operation of (all) the electrolysis assemblies. Alternatively or additionally, it becomes possible to provide protective voltages to maintain stability and proper function of the electrolysis assemblies during those times. Similarly, during times of high power generation, for example during excellent weather conditions, excess energy not required for the operation of all of the electricity assemblies may be fed into the power grid. Thus, a waste of energy can be prevented.

In yet another preferred embodiment, the electrolysis system comprises at least one energy storage unit, for example a battery, configured to store at least a part of the electrical energy generated by at least one photovoltaic assembly. By this means, a particularly stable, power grid independent operation of the electrolysis system in particular all of the actresses assemblies, becomes possible. Alternatively or additionally, depending on market price for electrical power, (excess) energy may be stored and be fed into the grid at a later time to stabilize the power grid if required, or when economically advantageous.

In yet another preferred embodiment, each electrolysis unit comprises a, in particular decentral, energy storage unit. By this means, the storage of electrical energy becomes possible without requiring a central logic configured to coordinate the charging of a central storage unit.

Alternatively or additionally, the system comprises a central energy storage unit. By this means, the access to stored electrical energy by the various electrolysis units can be simplified. Also, the effort for coordinating the routing of electrical energy drawn from the energy storage unit to any one of the electrolysis units can be reduced.

In yet another preferred embodiment, the energy storage unit is configured to store electrical energy from the power grid. For example, the electrolysis system, in particular a central control unit, can be configured to store electrical energy from the power grid in the energy storage unit when the market price for electrical energy is particularly low and/or a low generation of electrical energy by the photovoltaic assemblies is foreseen. This not does only allow to stabilize the power grid if necessary, but also to make a provision for times of high market prices for electrical energy and substantially sustain operation of all of the electrolysis assemblies.

In yet another preferred embodiment, in each electrolysis unit, the photovoltaic assembly is electrically coupled with the electrolysis assembly via a main power line, wherein a distribution unit is electrically arranged in the main power line. The distribution unit is advantageously configured as a power splitter, e.g. DC power electronics. Preferably, the distribution unit is configured to control the amount of electrical energy transferred via the main power line, in particular to the electrolysis assembly. For example, the distribution unit may be configured to route direct current between the photovoltaic assembly and the electrolysis assembly on one side and additional loads and/or services, respectively, on the other side. In particular, additional, i.e. external, electrical energy may be provided to the electrolysis assembly by means of the distribution unit. This allows for a reliable regulation of the electrical energy provided to the electrolysis assembly, in particular of the voltage applied to the electrolysis assembly. Hence, the electrolysis assembly may be operated in an optimal operating state at nearly all times.

In yet another preferred embodiment, the distribution unit is configured as a power splitter to distribute the electrical energy in a continuous manner. For example, the distribution unit may be configured to route a first part of the electrical energy to the corresponding electrolysis assembly, and to simultaneously route a second part of the electrical energy to another electrolysis unit and/or the power grid. By this means, the generated electrical energy may be utilised in a particularly flexible manner.

Alternatively, the distribution unit can be configured as a switch. In this case, all of the electrical energy generated by the photovoltaic assembly may be routed either completely to the corresponding electrolysis assembly or completely to another load, e.g. an energy storage unit, a central splitting unit, or the like.

In yet another preferred embodiment, the distribution unit is configured to, preferably continuously, adjust the amount of electrical energy provided to the respective electrolysis assembly. Preferably, the distribution unit is configured to adapt, in particular increase, the electrical voltage applied to the electrolysis assembly. By this means, a substantially sustained operation of the electrolysis assembly at an optimal operating point and thus particularly efficient generation of the electrolysis product can be achieved.

For example, the distribution unit may be configured to split off a part of the direct current in the main power line provided by the photovoltaic assembly into a DC/DC converter, and/or to add the output voltage of the DC/DC converter to the voltage of the main power line. If only a part of the direct current in the main power line is splitted off in this manner, the losses due to the conversion in the DC/DC converter may be kept to a minimum.

In yet another preferred embodiment, the distribution unit is electrically coupled, in particular electrically connected, with the energy storage unit and/or a further distribution unit of at least one other electrolysis unit. In particular, the distribution unit may be coupled to an external energy source, in particular the power grid. Preferably, the distribution unit is coupled with the further distribution unit of at least one other electrolysis unit and/or the power grid via the central power splitting unit. This allows flexible distribution of generated electrical energy between the electrolysis assembly and further loads. In particular, the distribution unit may be configured to feed additional, i.e. external, electrical energy to the electrolysis assembly.

A method for generating an electrolysis product according to a second aspect of the invention comprises: (i) generating electrical energy from electromagnetic radiation by means of photovoltaic assemblies of a plurality of electrolysis units; (ii) in particular selectively, distributing the generated electrical energy between electrolysis assemblies of the plurality of electrolysis units by means of an electrical interconnection between the electrolysis units; and (iii) generating the electrolysis product from a supply medium by providing the distributed electrical energy to a plurality of electrolysis cells of at least one of the electrolysis assemblies.

The properties, features and advantages of the invention described above, as well as the manner in which they are achieved, will be explained in more detail in connection with the figures in the following description of examples. Where appropriate, the same reference signs are used in the figures for the same or corresponding elements of the invention. The examples serve to explain the invention and do not limit the invention to the combinations of features indicated therein, even with respect to functional features. Moreover, any of the features disclosed in the examples below may be considered in isolation and suitably combined with the features of any of the above embodiments and their further aspects.

It is shown in
- FIG 1: an example of an electrolysis unit comprising a photovoltaic assembly, the photovoltaic assembly having a plurality of photovoltaic modules;
- FIG 2: an example of an electrolysis unit comprising a coupling interface;
- FIG 3: an example of an electrolysis unit comprising a regulation assembly; and
- FIG 4: an example of an electrolysis system comprising a plurality of electrically intercoupled electrolysis units.

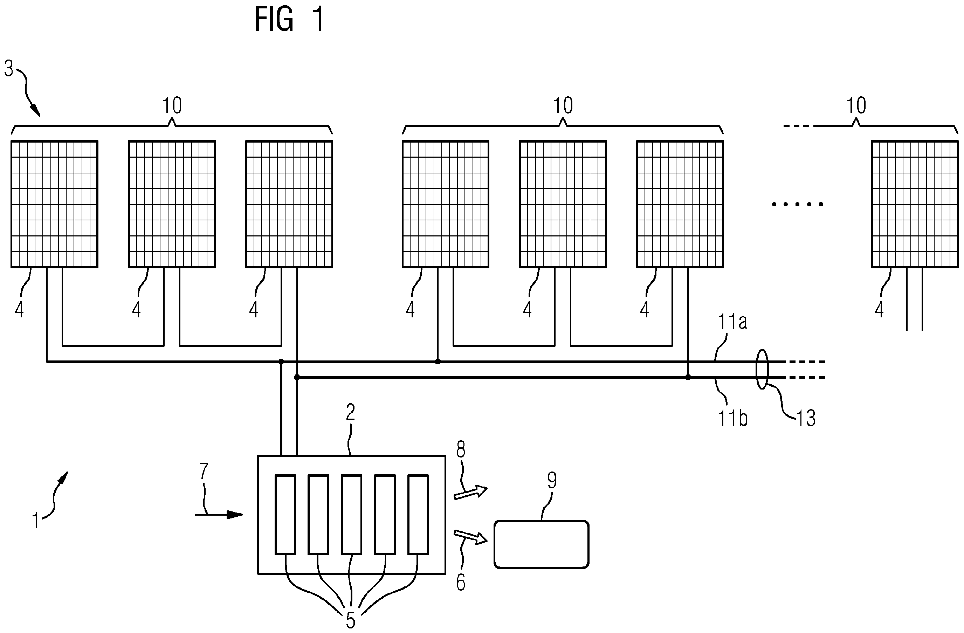

FIG 1 shows an example of an electrolysis unit 1 comprising an electrolysis assembly 2 and a photovoltaic assembly 3. The photovoltaic assembly 3 comprises a plurality of photovoltaic modules 4 each configured to generate a direct current from incident electromagnetic radiation, in particular sunlight. The electrolysis assembly 2 comprises a plurality of electrolysis cells 5 each configured to generate, upon provision with direct current generated by the photovoltaic assembly 3, an electrolysis product 6 from a supply medium 7, along with a side product 8. In the present example, the electrolysis unit 1 comprises an optional storage assembly 9 configured to store the generated electrolysis product 6.

Preferably, the plurality of photovoltaic modules 4 are electrically connected in series and in parallel at the same time. To this end, the plurality of photovoltaic modules 4 are arranged in a plurality of photovoltaic units 10, wherein each photovoltaic unit 10 comprises a plurality of photovoltaic modules 4 electrically connected in series. In the present example, each photovoltaic unit 10 comprises three photovoltaic modules 4. However, it is conceivable that each photovoltaic unit 10 comprises up to 20 photovoltaic modules 4, in order to raise the electrical voltage generated by the photovoltaic units 10 to a level which is suitable for efficient operation of the electrolysis assembly 2. For example, if the electrolysis assembly 2 comprises 30 to 100 electrolysis cells 5, and each cell operates at a voltage between 1.5 V and 4 V, e.g. 2.5 V, then 3 to 20 photovoltaic modules 4 connected in series may be advantageously provided to boost the voltage from 20 V to 200 V of a single photovoltaic module 4 to several hundred volts, even up to 2 kV, required for a particularly reliable operation the electrolysis assembly 2.

In order to efficiently provide this electrical voltage to the electrolysis assembly 2, the electrolysis unit 1 preferably comprises a pair of current collection lines 11a, 11b , constituting a main power line 13 for transmitting electrical energy produced by the photovoltaic assembly 3 to the electrolysis assembly 2. From each photovoltaic unit 10, one photovoltaic module 4, in particular the first one of the series, may be electrically connected to a first current collection line 11a of the main power line 13, and another one photovoltaic module 4, in particular the last one of the series, may be electrically connected to a second current collection line 11b of the main power line 13.

Such connection of the photovoltaic assembly 3 to the main power lines 13 is particularly easy to achieve if, as in the present example, the different photovoltaic units 10 are electrically connected in parallel. This not only facilitates connection to the main power lines 13, but also allows for boosting of the direct current generated by each photovoltaic unit 10.

For example, the electrolysis unit 1 may comprise between 100 and 1000 photovoltaic units 10 in order to provide a total electrical direct current in the range of 1 kV to 10 kV. Such current levels are required to efficiently operate an electrolysis assembly 2 having 30 to 100 electrolysis cells 5 stacked together, thereby providing an electrolysis area of 0.1 m² to 5 m² to which current densities in the range between 0.1 A/cm² and 5 A/cm² are applied advantageously.

With such an electrolysis unit 1, for example hydrogen H₂ may efficiently be produced as an electrolysis product 6 from water H₂O as the supply medium 7. As a side product 8 from the electrolysis process, oxygen O₂ is produced. However, a different supply medium 7 such as carbon dioxide CO₂ or nitrogen N₂ may be provided as well, enabling the production of carbon monoxide CO, hydrocarbons such as methane CH₄ or ammonia NH₃ respectively.

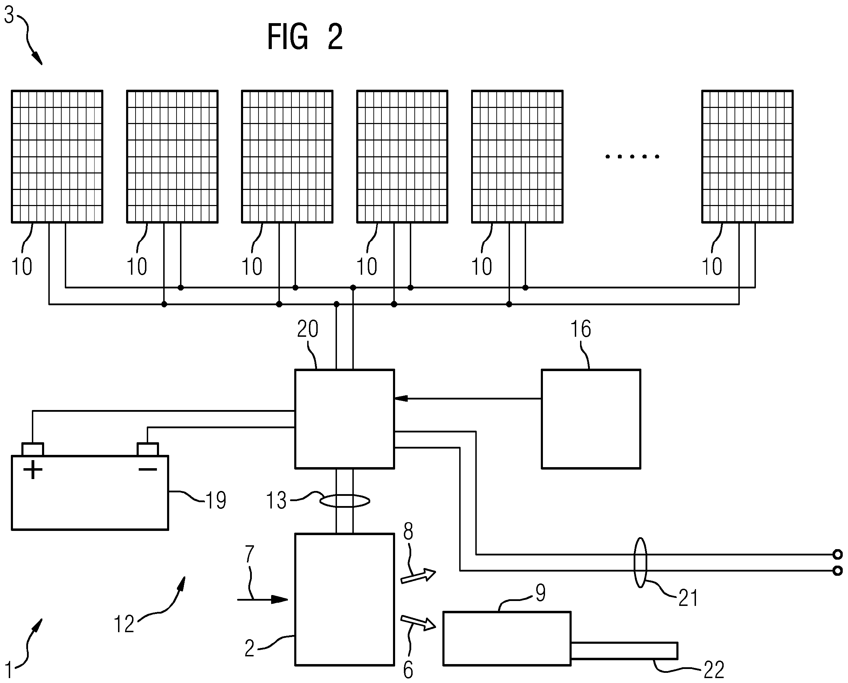

FIG 2 shows an example of an electrolysis unit 1 comprising a coupling interface 21 for electrically coupling the electrolysis unit 1 with other electrolysis units 1. As in FIG 1, the electrolysis unit 1 further comprises an electrolysis assembly 2 configured to generate an electrolysis product 6 from a supply medium 7, along with a side product 8, and a photovoltaic assembly 3. The electrolysis assembly 2 is preferably electrically coupled to the photovoltaic assembly 3 via a main power line 13. According to the present example, a distribution unit 20 is electrically arranged in the main power line 13, the distribution unit 20 being configured to electrically connect an energy storage unit 19 and/or the coupling interface 21 and/or the photovoltaic assembly 3 with the electrolysis assembly 2. Alternatively or additionally, the distribution unit 20 is configured to electrically connect the coupling interface 21 with the photovoltaic assembly 3 and/or the electrolysis assembly 2 and/or the energy storage unit 19.

In the present example, the photovoltaic assembly 3 comprises a plurality of photovoltaic units 10 electrically connected in parallel, wherein each photovoltaic unit 10 may comprise a plurality of photovoltaic modules (cf. FIG 1) electrically connected in series.

The energy storage unit 19, for example a battery, is configured to store energy, in particular the electrical energy generated by the photovoltaic assembly 3. However, the energy storage unit 19 can alternatively or additionally be configured to store electrical energy provided by the coupling interface 21, e.g. from photovoltaic assemblies of other electrolysis units, or from an external power grid. Preferably, the energy storage unit 19 is part of a regulation assembly 12, the regulation assembly 12 being advantageously configured to adjust the electric energy provided to the electrolysis assembly 2.

Alternatively or additionally, the regulation assembly 12 (also) comprises the distribution unit 20 and/or the coupling interface 21. Optionally, the regulation assembly 12 may (also) comprise a control unit 16, e.g. for controlling the distribution unit 20.

The distribution unit 20 is preferably configured as a power splitter, e.g. DC power electronics. The distribution unit 20 is preferably configured to selectively route direct current generated by the photovoltaic assembly 3 to the electrolysis assembly 2, to the energy storage unit 19 and/or the coupling interface 21, in particular to distribute the direct current between the electrolysis assembly 2, the energy storage unit 19 and/or the coupling interface 21. Alternatively or additionally, the distribution unit 20 may be configured to route, in particular distribute, direct current from the energy storage unit 19 to the electrolysis assembly 2 and/or the coupling interface 21, and/or route, in particular distribute, direct current from the coupling interface 21 to the electrolysis assembly 2 and/or the energy storage unit 19. This allows for flexible use of the electrolysis unit 1. In particular, the electrical energy generated by the photovoltaic assembly 3 may be efficiently used, and at the same time, the electrolysis assembly 2 may be efficiently operated.

For example, if the electrical energy generated by the photovoltaic assembly 3 exceeds the power requirements of the electrolysis assembly 2, the excess power may be stored in the energy storage unit 19 and/or be fed to the electrolysis assembly of another electrolysis unit or even the external power grid via the coupling interface 21. Accordingly, no power is wasted. In another example, if the electrical energy generated by the photovoltaic assembly 3 does not meet the power requirements of the electrolysis assembly 2, additional electrical energy may be drawn from the energy storage unit 19 and/or the from the photovoltaic assembly of another electrolysis unit or even the external power grid via the coupling interface 21. Accordingly, reliable operation of the electrolysis assembly 2 in its optimum operating point can be achieved.

The electrolysis assembly 2 may be coupled to a storage assembly 9 (cf. FIG 1). This storage assembly 9 may be a central storage assembly coupled to electrolysis assemblies of other electrolysis units as well, in order to gather all of the produced electrolysis product 6. The storage assembly 9 may be coupled to a product interface 22 for distribution of the electrolysis product 6, e.g. a corresponding grid or transport infrastructure.

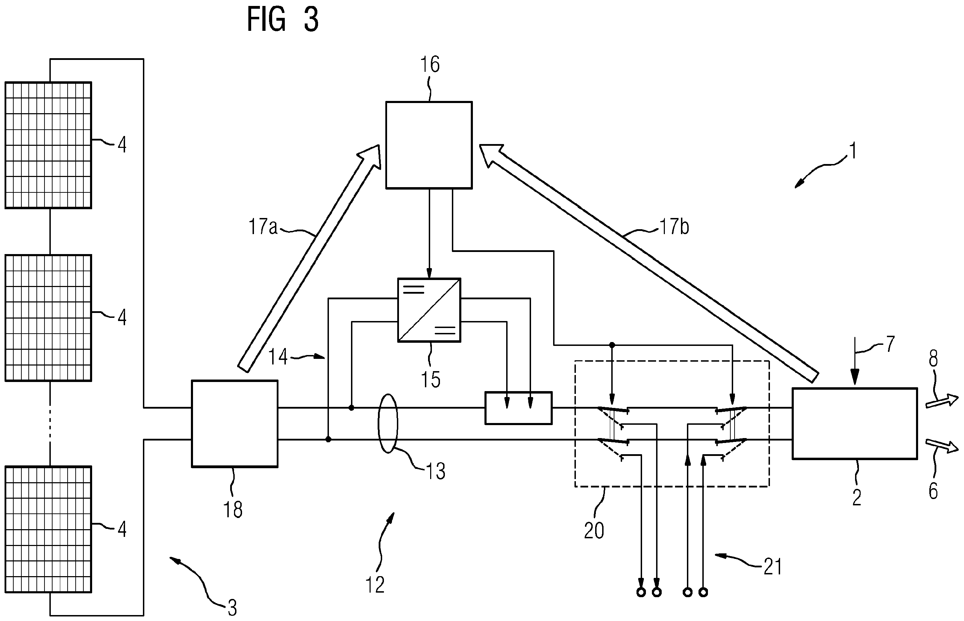

FIG 3 shows an example of an electrolysis unit 1 comprising an electrolysis assembly 2 for generating an electrolysis product 6 from a supply medium 7 via electrolysis, possibly along with a side product 8, a photovoltaic assembly 3 for providing a direct current via a main power line 13 to the electrolysis assembly 2 in order to drive the electrolysis, and a regulation assembly 12 for adjusting the provision of electrical energy to the electrolysis assembly 2. The electrolysis unit 1 further comprises a coupling interface 21 configured for electrically coupling the electrolysis unit 1 with other electrolysis units.

Although not shown explicitly in the present example, the photovoltaic assembly 3 may comprise not only a plurality of photovoltaic modules 4 electrically connected in series, but also a plurality of photovoltaic units electrically connected in parallel (cf. FIG 1).

In the present example, the regulation assembly 12 comprises a regulation power line 14, a DC/DC converter 15, and a control unit 16. The regulation assembly 12 is configured to split off a part of the direct current generated by the photovoltaic assembly 3, and route it into the regulation power line 14. The regulation assembly 12 is further configured to add an output voltage of the DC/DC converter 15 electrically arranged in the regulation line 14 to a voltage in the main power line 13. By this means, substantially sustained operation of the electrolysis assembly 2 at a required operating voltage can be achieved.

The control unit 16 is preferably configured to adjust the amount of direct current splitted off from the main power line 13, for example by accordingly controlling the DC/DC converter 15.

In the present example, the control unit 16 is configured to adjust the provision of electrical energy, in particular the electrical voltage, to the electrolysis assembly 2 based on an operating state of the electrolysis assembly 2 and/or based on an operating state of the photovoltaic assembly 3. For example, the control unit 16 may be configured to receive photovoltaic data 17a from the photovoltaic assembly 3, in particular from a regulation unit 18 of the photovoltaic assembly 3. The photovoltaic data 17a preferably characterises the operating state of the photovoltaic assembly 3, in particular the electric voltage and/or the direct current level provided by the photovoltaic assembly 3. Such regulation units 18 are also termed "maximum power point tracker" and are usually provided for ensuring that the respective photovoltaic assembly 3 operates at its maximum power output.

Likewise, the control unit 16 may be configured to receive electrolysis data 17b from the electrolysis assembly 2, the electrolysis data 17b preferably characterising the operating state of the electrolysis assembly 2. For example, the electrolysis data 17b may contain information about the power consumption, the temperature and/or the pressure of or in the electrolysis assembly 2, respectively.

Accordingly, the control unit 16 may adapt the operation of the DC/DC converter 15 to the requirements of the electrolysis assembly 2 and/or the performance of the photovoltaic assembly 3.

Additionally or alternatively, the control unit 16 may be configured to control a distribution unit 20 in the main power line 13. In the present example, the distribution unit 20 is configured as a switch for routing direct current generated from the photovoltaic assembly 3 exclusively to the electrolysis assembly 2 or the coupling interface 21. In an alternative example, however, the distribution unit 20 is configured as a power splitter for continuously distributing the direct current between the electrolysis assembly 2 and the coupling interface 21 in a continuous manner, for example based on the available electrical power from the photovoltaic assembly 3 and/or the power requirement of the electrolysis assembly 2. To this end, the power splitter is preferably realised by DC power electronics.

While in the present example, the distribution unit 20 is electrically arranged in the main power line 13 between the regulation power line 14 and the electrolysis assembly 2 such that the direct current possibly modified by the DC/DC converter 15 can be routed, it is also conceivable to provide the coupling interface 21 further upstream, i.e. at the beginning of the regulation power line 14. In particular, the distribution unit 20 may also electrically couple the regulation power line 14 to the main power line 13 and be configured to split off at least a part of the direct current in the main power line 13 into the regulation power line 14. In other words, the distribution unit 20 may be configured to route, and particular distribute, the direct current from the electrolysis assembly 3 selectively into/to the regulation power line 14, the electrolysis assembly 2 and/or the coupling interface 21. The distribution unit can hence be part of the regulation assembly 12.

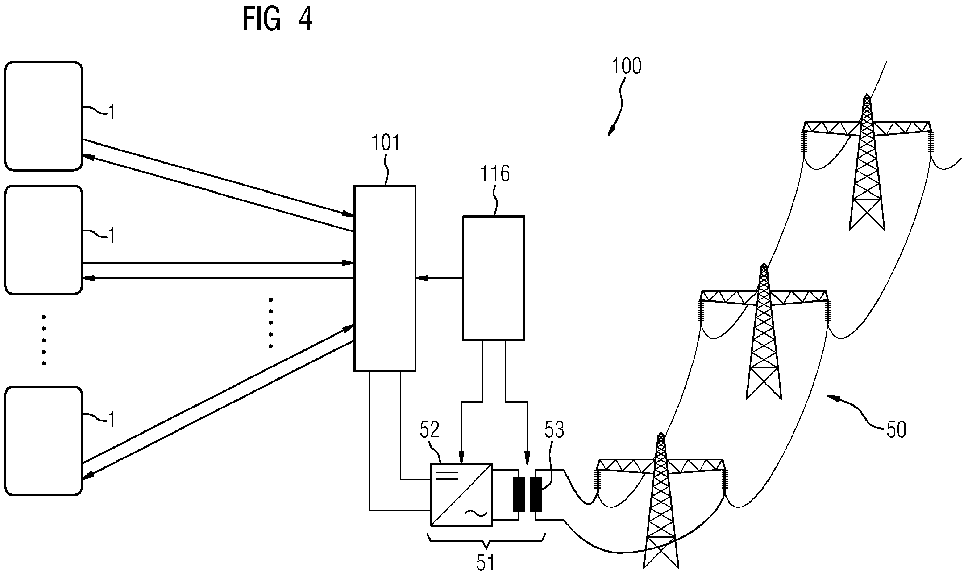

FIG 4 shows an example of an electrolysis system 100 comprising a plurality of electrically intercoupled electrolysis units 1. The system 100 further comprises a central power splitting unit 101 and a central control unit 116 configured to control the central power splitting unit 101. The central power splitting unit 101 is electrically coupled to a power grid 50 via an external power connection 51, e.g. a corresponding power grid interface 51.

The power grid interface 51 exemplarily comprises an inverter 52 for converting the electrical direct current on the side of the electrolysis system 100 into electrical alternating current on the side of the power grid 50 and/or vice versa. Additionally, the power grid interface 51 may comprise a transformer 53 for adapting the electrical voltage on the side of the electrolysis system 100 to the voltage of the power grid 50 and/or vice versa.

In the present example, the electrical coupling between the electrolysis units 1 is achieved via electrical connections, in particular bidirectional connections, between each one of the electrolysis units 1 and the central power splitting unit 101. The central power splitting unit 101 is preferably configured to receive direct current generated from the photovoltaic assembly (cf. FIG 2) of at least one of the electrolysis units 1 and to transmit said received direct current to at least one other of the electrolysis units 1, in particular to a respective electrolysis assembly (cf. FIG 2) of said other electrolysis units 1. In particular, the central power splitting unit 101 may be configured to distribute the electrical energy generated by the photovoltaic assemblies between at least some of the electrolysis units 1. Optionally, the central power splitting unit 101 may be configured to feed at least a part of the received electrical energy into the power grid 50 via the external power connection 51.

The amount of electrical energy directed to the electrolysis units 1 and/or the power grid 50 is preferably controlled by the central control unit 116, which may control the central power splitting unit 101 accordingly. To this end, the central control unit 116 may be configured to receive data indicative of an operating state of anyone of the electrolysis units 1, in particular of the photovoltaic assemblies and/or the electrolysis assemblies, and/or indicative of an operating state of the power grid 50.

Controlling the central power splitting unit 101 allows for a plurality of different operating modes of the electrolysis system 100:
For example, in the case of unfavourable weather conditions, e.g. during times with low sunlight, the electrical energy generated by one photovoltaic assembly may not be sufficient for optimal operation of the corresponding electrolysis assembly, as the electrolysis assembly may comprise pumps, control means for achieving an optimal temperature, product separation means e.g. for CO₂ processing, et cetera. Accordingly, the electrical energy generated by more than one photovoltaic assembly can be redirected or collected, respectively, to optimally run the electrolysis assembly of at least one electrolysis unit 1. For instance, three electrolysis units 1, the photovoltaic assemblies of which generate 200 V to 400 V, may be combined to operate the electrolysis assembly of one electrolysis unit 1 requiring 600 V to 1200V.

Alternatively or additionally, in case of shutdown, maintenance or repair of the electrolysis assembly of one of the electrolysis units 1, the electrical energy generated by the according photovoltaic assembly may be utilised by the electrolysis assembly of another electrolysis unit 1 and/or be fed into the power grid 50.

Alternatively or additionally, in the case of unfavourable weather conditions with low sunlight, additional electrical energy from the power grid 50 can be fed to the electrolysis units 1. This allows optimal operation of the electrolysis assemblies.

Alternatively or additionally, in the case of low electricity prices, the electrolysis assemblies can be at least partly be operated based on electric energy drawn from the power grid 50. Similarly, the electrolysis assemblies can be operated based on electrical energy drawn from the power grid 50 during night time, when no sunlight is available and the electricity prices are sufficiently low.

Alternatively or additionally, if the electrolysis units 1 comprise energy storage units (cf. FIG 2), the energy storage units can be charged with electrical energy drawn from the power grid 50 during times with low electricity prices. The stored energy can then be advantageously used for operation of the electrolysis assemblies. It is also conceivable that the stored energy can be fed back to the power grid 50 later on, e.g. sold when electricity prices are high. Thus, the system 100 allows for energy trading, by which the revenue of the system 100 can be further increased.

Alternatively or additionally, the energy stored in the energy storage units may be used to provide ancillary services to the power grid 50, in particular to stabilise the power grid 50. Therein, a large number of electrolysis units 1 can be used to increase the resilience of the power grid 50.

Although the invention has been further illustrated and described in detail by the above examples, the invention is not limited by the disclosed examples, and other variations may be derived therefrom by those skilled in the art without departing from the scope of the invention.

## Claims

1. An electrolysis system (100), comprising a plurality of electrically intercoupled electrolysis units (1), each having
- an electrolysis assembly (2) comprising a plurality of electrolysis cells (5) configured to, upon provision of a direct electrical current, generate an electrolysis product (6) from a supply medium (7), and
- a photovoltaic assembly (3) electrically coupled to the electrolysis assembly (2) for providing the electrolysis cells (5) with direct electrical current generated from incident electromagnetic radiation.

2. The electrolysis system (100) according to claim 1, wherein the electrolysis system (100) is configured to distribute electrical energy generated from the photovoltaic assemblies (3) between the electrolysis assemblies (2) based on at least one control parameter.

3. The electrolysis system (100) according to claim 2, wherein the control parameter is any one of the following: a total energy output of the photovoltaic assemblies (3), an operating state of a power grid (50), a market price for electrical power, a prediction of the market price of electrical power, a prediction of illumination conditions, an amount of electrical energy stored in an at least one energy storage unit (19), maximum electrolysis product production, equipment life-time optimization, minimum degradation, storage assembly utilization, optimization of static pressure level of the electrolysis product, cooling conditions, heat utilization, optimization of oxygen usage and/or optimization of supply by the supply medium (7).

4. The electrolysis system (100) according to any one of the preceding claims,
comprising a central power splitting unit (101) electrically connected to each of the electrolysis units (1), the central power splitting unit (10) being configured to selectively route electrical energy between at least two electrolysis units (1).

5. The electrolysis system (100) according to any one of the preceding claims,
comprising a control unit (16; 116) configured to control the distribution of electrical energy generated by the photovoltaic assemblies (3) between the electrolysis assemblies (2) based on an operating state of at least one of the photovoltaic assemblies (3) and/or an operating state of at least one of the electrolysis assemblies (2).

6. The electrolysis system (100) according to any one of the preceding claims,
comprising an external power connection (51) configured to be electrically coupled to a power grid (50).

7. The electrolysis system (100) according to claim 6,
wherein the electrolysis system (100) is configured to draw electrical energy from the power grid (50) via the external power connection (51) and/or to provide electrical energy generated by the photovoltaic assemblies (3) to the power grid (50) via the external power connection (51).

8. The electrolysis system (100) according to any one of the preceding claims,
comprising at least one energy storage unit (19) configured to store at least a part of the electrical energy generated by at least one photovoltaic assembly (3).

9. The electrolysis system (100) according to claim 8,
wherein each electrolysis unit (1) comprises an energy storage unit (19).

10. The electrolysis system (100) according to any one of claims 8 or 9,
wherein the energy storage unit (19) is configured to store electrical energy from the power grid (50).

11. The electrolysis system (100) according to any one of the preceding claims,
wherein in each electrolysis unit (1), the photovoltaic assembly (3) is electrically coupled with the electrolysis assembly (2) via a main power line (13), wherein a distribution unit (20) is electrically arranged in the main power line (13).

12. The electrolysis system (100) according to claim 11,
wherein the distribution unit (20) is configured as a power splitter to distribute the electrical energy in a continuous manner.

13. The electrolysis system (100) according to any one of claims 11 or 12,
wherein the distribution unit (20) is configured to adjust the amount of electrical energy provided to the respective electrolysis assembly (2).

14. The electrolysis system (100) according to any one of claims 11 to 13,
wherein the distribution unit (20) is electrically coupled with the energy storage unit (19) and/or a further distribution unit (20) of at least one other electrolysis unit (1).

15. Method for generating an electrolysis product (6), comprising
- generating electrical energy from electromagnetic radiation by means of photovoltaic assemblies (3) of a plurality of electrolysis units (1);
- distributing the generated electrical energy between electrolysis assemblies (2) of the plurality of electrolysis units (1) by means of an electrical interconnection between the electrolysis units (1); and
- generating the electrolysis product (6) from a supply medium (7) by providing the distributed electrical energy to a plurality of electrolysis cells (5) of at least one of the electrolysis assemblies (2).
